# EUROPEAN PATENT SPECIFICATION

(11) **EP 0 469 122 B1**
(45) Date of publication and mention of the grant of the patent: **11.01.1995**
(21) Application number: 91904618.5
(22) Date of filing: 19.02.1991
(51) Int. Cl.: B65F 1/14, B65F 1/00

(54) **DOMESTIC WASTE PROCESSOR**
HAUSMÜLLPROZESSOR
APPAREIL DE TRAITEMENT DE DECHETS MENAGERS

(30) Priority: 20.02.1990 GB 9003788; 19.09.1990 GB 9020459
(43) Date of publication of application: 05.02.1992
(73) Proprietor: PRYDE FOUNDATION, 9490 Vaduz (LI)
(72) Inventor: ISMAIL, Muhammad Ali, Perth PH2 7QQ (GB)
(74) Representative: Szczuka, Jan Tymoteusz
(86) International application number: GB9100251
(87) International publication number: WO9113010

(56) References cited:
- EP-A- 0 389 735
- DE-A- 3 517 525
- DE-A-27 181 145
- FR-A- 319 288
- FR-A- 1 452 829
- FR-A- 2 598 086

## Description

The present invention relates to a processor suitable for use in the collection of domestic waste and facilitating the recycling thereof.

Many reusable and recyclable materials such as glass, plastic, metals, papers etc. are currently disposed of by the domestic householder collectively in bags or bins which are collected by the local authority and subsequently either incinerated and/or used in land fill sites or dump sites. Such methods of disposal are not only wasteful of many recyclable resources but also cause pollution to the environment.

It is an object of the present invention to avoid or minimise one or more of the above disadvantages.

The present invention provides a domestic waste processor for a plurality of different types of waste, comprising a housing having a plurality of inlet means connected to a respective collection zones provided, with removable containers characterized by separate passage means between each said inlet means and said collection zones, each said passage means having compaction means formed and arranged for effective compaction of at least one of the plurality of different types of waste passing through a said passage means.

Thus the domestic waste processor of the invention provides in a convenient and economic manner, means for collection of different types of waste in a form which substantially facilitates subsequent processing and recycling thereof whilst at the same time reducing the requirement for frequent waste collections by public utilities to a greater or lesser extent.

Preferably said domestic waste processor is a domestic appliance generally similar in size and configuration to a washing machine, dish washer or the like and desirably is formed and arranged so as to be compatible with the modular design system of modern fitted kitchens. Naturally though somewhat larger sizes may be used in e.g. hotels, restaurants etc for domestic-type waste. Preferably said passage means are formed and arranged for substantially gravity-fed operation of the processor.

Advantageously the passage means are formed and arranged upstream of the compaction means e.g. by means of a suitable cranked configuration, so as to restrict substantially user access to the compaction means through said passage means for safety reasons.

The inlet means are preferably provided with cover means formed and arranged to be moveable from an open position, to provide access for waste material to said passage means, to a closed position, wherein said cover means covers the inlet means. Desirably the cover means is provided with hygienic sealing means for minimising escape of foul odours etc. from the collected waste. Desirably said processor is provided with process over-ride means formed and arranged to stop said compaction means more or less immediately should said cover means be opened during processing. Conveniently the removable containers are provided with hygienic closure means to protect the user during removal of filled containers from the processor and/or subsequent disposal e.g. to a community collection facility.

Any suitable method of compaction can be used and may include for instance rotary paddle or blade compaction means or reducing screw pitch type compaction means for compressing the waste material. Preferably each respective passage means is provided with individual compaction means, conveniently driven by electric motor means provided with control means formed and arranged for automatic or semi-automatic operation upon introduction of waste material or for manual operation, as required by the user. The type of compaction means selected for each respective passage may depend on the type and nature of waste material to be compacted by respective compactor, for instance glass and metal require more rigid and aggressive compaction means than do paper and organic waste, but for convenience and ease of manufacture, the same type of compactor may be used in each of the passage means.

As used herein the expression "compaction means" indicates means for effecting any process which has the result of reducing to a greater or lesser extent the volume occupied by the waste material. Thus the "compaction means" of the invention includes means for compressing waste and/or for reducing the size of pieces of waste by any suitable process including for example tearing, shredding, grinding, and cutting. It will of course be appreciated that different processes may be preferred for different types of waste. Thus, for example, metal cans may be simply compressed, whilst glass bottles can be ground into small pieces which readily pack together in a much smaller space, and paper and vegetable matter may be comminuted by threshing, cutting, shredding or tearing, and then compressed.

Thus a wide variety of compaction means may be used in the processor of the invention. In general though a rotor driven at greater or lesser speed is preferred. Various forms of rotor may be used, which may moreover be formed and arranged for co-operation to a greater or lesser extent with an opposed wall means. In general the rotors are provided with waste material engagement means which may be in the form of circumferentially and/or laterally spaced apart teeth; cutting blades extending in the plane of rotation of the rotor or obliquely relative thereto; or paddles extending parallel to the longitudinal axis of rotation.

The rotors are desirably formed and arranged so as to be driven sufficiently fast to process the waste material more or less quickly and/or to achieve a substantial degree of comminution In general the rotors will be driven at a speed of from 10 to 200 r.p.m., e.g. from 40 to 80 r.p.m., preferably from 50 to 60 r.p.m. for rotors used for comminution.

Advantageously the processor is provided with wall means formed and arranged for co-operation with one or more rotors to assist in comminution and/or compression. In general the wall means are disposed opposite part of the rotor periphery so as to define a restricted passageway between the rotor periphery and the wall means for waste material, desirably with a progessively reducing spacing between the rotor periphery and the wall means so that waste material carried along the passageway by the rotor is more or less progressively compressed between the rotor periphery (including any waste material engagement means such as teeth, blades or paddles, thereon) and the wall means to facilitate comminution thereof and/or to compress the waste material. If desired the wall means may also be provided with such waste material engagement means further to facilitate comminution.

Conveniently the inlet means are clearly identified as to which type of waste material can be inserted to ensure that different waste materials are collected separately. Advantageously sensor means may be provided around the entrance to the passage means to detect the presence or otherwise of material, wherein said sensor is formed and arranged to activate the compaction means operation.

In use of an inlet means identified for metal, said passage means is conveniently provided with magnetic separator means formed and arranged for separating ferrous and non-ferrous metals into respective compaction means and collection zones.

For hygienic purposes and for ease of emptying and/or collection, said removable containers are conveniently provided with disposable linings e.g. bags of suitable plastics material e.g. high density polyethylene HDPE, that are easy to remove, replace and handle. For greater convenience said removable containers once full, are formed and arranged to allow themselves to be disposed and recycled along with their contents.

Preferably the waste processor of the invention is provided with an internal washing system whereby upon completion of the compaction cycle, water from the domestic water supply is piped through the processor and desirably having had mixed therein a detergent, to form a cleaning agent is introduced into the passage means so as to wash those parts of the waste processor that have come into contact with waste material. The washing system may be provided with nozzle means so as to direct a cleaning agent at more or less high pressure to areas within the waste processor, for instance the compaction means, which may require more rigorous cleaning than the inlet chute for instance. The washing system is also provided with an effluent discharge means which may include a pump to pump the used cleaning agent that has drained to the bottom of the tank into the domestic drainage system.

Further the waste processor of the invention may be provided with an extractor fan formed and arranged to suck air out of the processor and hence remove any unpleasant odours after use of the system. This feature in combination with the hygiene sealing means mentioned supra provides for a waste processor which is not unpleasant in or after use. The detergent added to the washing system desirably has a pleasant smelling fragrance added thereto further to minimise the effects of any unpleasant odours that may emanate from the waste material.

In the interest of safety, the materials used to manufacture the waste processor of the invention will be able to resist the corrosive, sharp, abrasive, inflammable etc. materials that the processor handles. Desirably also the inlet and passage means have smooth surfaces and corners to prevent jamming and subsequent build up of waste materials, in addition to facilitating cleaning of said inlet and passage means.

The present invention also provides a method of facilitating the recycling of domestic waste material in a domestic environment comprising the steps of:
providing a waste processor;
separating the waste material into different categories;
and
introducing the different categories of waste into different inlet means of said processor, for collection in separate respective collection zones therein,
characterized in that there is provided a domestic waste processor according to the present invention and in that said method includes the step of:
separately compacting at least one of the separated different categories of waste in transit from said different inlet means to said respective collection zones by said compaction means of said waste processor.

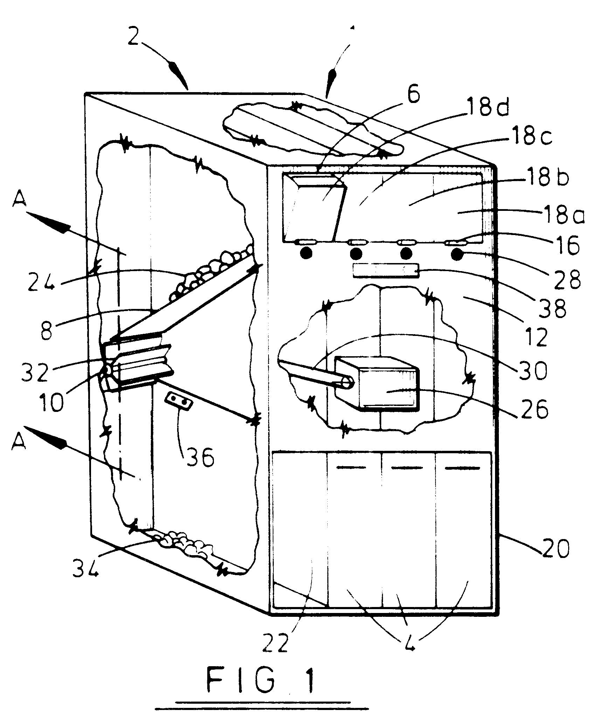

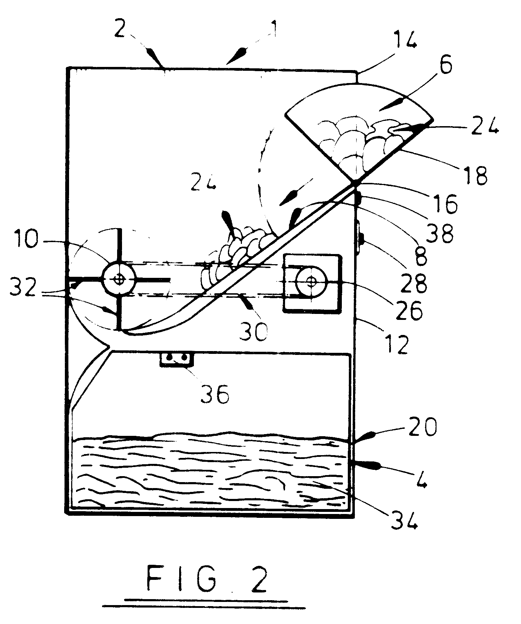

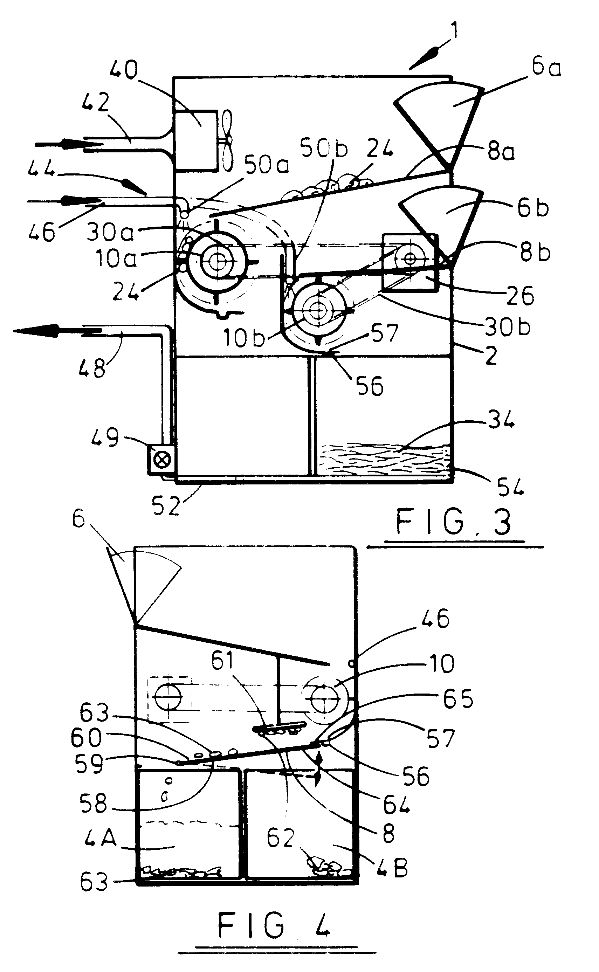

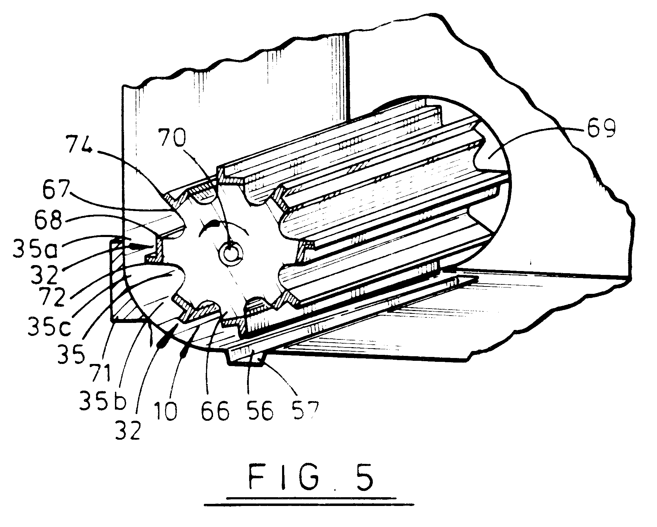

Further preferred features and advantages of the present invention will appear from the following detailed description given by way of example of some preferred embodiments illustrated with reference to the accompanying drawings in which:-
Fig. I is a partially cut-away perspective view of a waste processor of the invention;
Fig. II is a sectional side elevation of a similar waste processor with a modified form of compaction means;
Figs. III and IV are sectional side elevations of further preferred embodiments of the invention; and
Fig. V is an orthogonal view of a preferred embodiment of compaction means sectioned along line A-A of Fig.1
With reference to Figs. I and II a waste processor 1 of the invention comprises a housing 2, four waste material containers 4, four inlet apertures 6, delivery chutes 8 and a compactor 10.

In more detail Fig. I shows the housing 2 having six sides including a front side 12 having at its top portion 14, four entrance apertures 6 each covered and sealed by a hinged 16 operable covering plate 18. The lower portion 20 of the front side 12 has four generally oblong apertures 22 formed and arranged to said four waste material containers 4 which are slidably fitted into position.

Waste material 24 is first separated by the user into predetermined categories such as paper, organic waste, glass, metal and plastic. In this specific embodiment cover plate 18a is marked for use only with "paper", plate 18b "plastic", plate 18c "organic matter" and plate 18d for "metal" etc.

Waste material 24 is introduced into the appropriate inlet aperture 6 and slides, under the force of gravity, down a delivery chute 8 comprising an upstream portion of a respective passage means towards the compactor 10. An electric motor, 26, operable by an externally mounted switch 28, powers an endless drive belt 30, which causes the compactor 10 to rotate. The rotation of the paddles 32 as the material 24 enters said paddles 32 causes said material 24 to be crushed into a more or less compacted form 34. In more detail, the crushing action is achieved by the paddles 32 on the compactor 10 engaging waste material 24 and forcing the waste material 24 against an opposed wall 35. The opposed wall 35 is formed and arranged such that the spacing between the paddles 32 and the wall is progressively reduced so that waste material 24 driven by the engaging paddles 32 is gradually compressed by the action of the paddles 32 against the wall 35. The now compacted form 34 of waste 24 then falls into a corresponding waste material container 4 disposed in a respective collection zone downstream of the compactor 10. Once full the container may be removed, emptied and replaced. Conveniently the processor is provided with sensor means 36 for detecting a "full" condition of each container 4, which sensor is connected to suitable audio and/or visual signal output means 38 for alerting the user to such "full" condition.

Fig. II shows a generally similar processor in which is used a modified compactor 10 with deeper paddles 32 which may be preferred for more compressible material such as paper and organic waste.

Fig. III shows a processor generally similar to those in Figs. I and II and will be described with reference to the embodiments in Figs. I and II and indicated by like reference numbers.

The housing 2 contains two compactors 10 a, b, both of which are powered by an electric motor 26 via respective endless drive belts 30 a, b. The inlet apertures 6 a, b and the inlet chutes 8 a, b are positioned one above the other to maximise space utilisation in the waste processor 1. The processor 1 is provided with an extractor fan 40 and outlet duct 42 to extract unpleasant odours from the processor 1.

The processor 1 is also provided with a washing system 44 which comprises an inlet pipe 46 connected to the domestic water supply (not shown) and an outlet pipe 48 connected via a discharge pump 49 to the domestic drainage system. Water from the water supply is mixed with a detergent (not shown) and is sprayed through nozzles 50 a, b onto the waste compactors 10, the movement of the rotating compactors 10 assisting in washing of the paddles 32 thereof. The resulting effluent 52 drains to the bottom 54 of the processor 1 through a series of channels 56, the channels 56 being protected by sieves 57 formed and arranged to prevent any large or solid compacted waste material 34 from entering the effluent discharge pump 49. If desired the effluent pump 49 and the extractor fan 40 may be combined in a single unit (not shown).

It will be appreciated that various modifications may be made to the above described embodiment without departing from the scope of the claims. Thus for example a reducing pitch screw may be used as a compactor 10 and the number of inlet apertures 6 increased or decreased where a greater or lesser degree of specificty is required in the sorting of the waste material e.g. to allow for further manual sorting of metal waste into ferrous and non-ferrous categories, or glass waste into clear and coloured. Preferably though as shown in Fig. IV there is used a single inlet aperture for metal together with a separator means for automatically sorting into ferrous and non-ferrous categories since many users may not be readily able to distinguish these categories themselves. In more detail the delivery chute 8 has a section 58 hingedly mounted 59 at one end 60 remote from the compactor 10 for pivotal movement between a first position (shown in solid line) and a second position (shown in dashed outline). An electromagnet 61 is mounted above the chute section 58 and spaced therefrom so as to attract and retain ferrous metal waste fragments 61 while allowing non-ferrous metal fragments 63 to pass down the chute section 58 in its normally disposed first position, into a non-ferrous metal waste container 4A. When the non-ferrous metal has all passed through, the end 64 of the chute section 58 remote from the hinge 59 is unlatched (any suitable latching means 65 may be used e.g. solenoid operated latching means) to allow the section 58 to move to its second, lowered, position in which it is inclined in an opposite direction to its normal position, leading to a ferrous-metal waste container 4B. Upon deactivation of the electromagnet 61 the ferrous metal fragments 62 held thereby fall onto the chute section 58 and then pass down along it into the ferrous-metal waste container 4B, Subsequently the chute section 58 is restored to its normal first position by any suitable means e.g. piston and cylinder means, cam means, linkage means etc. (not shown). Conveniently the waste containers 4A, 4B are mounted in a basket or the like to facilitate removal of filled containers and insertion of fresh ones.

Fig. V shows in more detail the compactor 10 in Fig. 1. The compactor 10 comprises a generally cylindrical barrel 66 having a series of generally radially projecting elongate ribs 67 extending longitudinally therealong. Each rib 67 has a radially outer edge 68 to which is rigidly fixed an angle member 72 so as to form together therewith a paddle member 32. The angle member 72 is made from hardened steel and has a sharpened leading edge 74 for cutting waste material. A radially extending end plate 69 at each end of the barrel (only one end shown) prevents waste material engaged by the paddle members 32 from falling onto a support spindle 70 of the barrel 66 and fouling it. The opposed wall 35 which co-operates with the rotating paddles 32 for compressing waste material is in the form of a generally flat wall portion extending general tangentially to the outer surface of the rotor so as to be substantially convergent therewith, which flat portion leads into an arcuate portion extending around under the rotor in generally close proximity to the rotor surface. In general the greatest compaction occurs in the area 35c where said flat and arcuate portions 35a, 35b meet and the greatest forces are exerted on the wall 35 thereat. Desirably therefore this part 35c of the wall 35 is provided at its rear side with a strengthening plate 71.

A drainage channel 56 is provided to facilitate drainage of liquid material to the effluent discharge pump. A sieve 57 is disposed across the drainage channel 56 in order to prevent any large or solid compacted waste material from entering the effluent discharge pump.

In yet another possible modification the extractor fan 40 could be mounted at a lower part of the waste processor as required to optimise foul odour removal.

## Claims

1. A domestic waste processor for a plurality of different types of waste, comprising a housing (2) having a plurality of inlet means (6) connected to a respective collection zones provided, with removable containers (4) characterized by separate passage means (8) between each said inlet means and said collection zones, each said passage means having compaction means (10) formed and arranged for effective compaction of at least one of the plurality of different types of waste (24) passing through a said passage means (8).

2. A waste processor (1) as claimed in claim 1 wherein said processor (1) is in the form of a domestic appliance formed and arranged so as to be compatible with modular fitted kitchen design.

3. A waste processor (1) as claimed in claim 1 or claim 2 wherein said passage means (8) have a cranked configuration so as to restrict user access to the compaction means (10) through said passage means (8).

4. A waste processor (1) as claimed in any one of claims 1 to 3 wherein said passage means (8) are formed and arranged so as to lead generally downwardly towards said compaction means (10) from the inlet means (6) for gravity-fed operation of the processor (1).

5. A waste processor (1) as claimed in any one of claims 1 to 4 wherein said inlet means (6) is provided with cover means (18) formed and arranged with hygienic sealing means for minimising escape of odours.

6. A waste processor (1) as claimed in claim 5 wherein said processor is provided with process over-ride means for stopping said compaction means when said cover means (18) is opened during procesing.

7. A waste processor (1) as claimed in any one of claims 1 to 6 wherein said removable containers (4) are provided with hygienic closure means to protect a user during removal of filled containers (4) from the processor (1).

8. A waste processor (1) as claimed in any one of claims 1 to 7 wherein said compaction means (10) comprises at least one rotor having waste material engagement means (32) formed and arranged for comminution and compression of waste (24).

9. A waste processor (1) as claimed in claim 8 wherein said waste material engagement means (32) includes at least one of circumferentially and/or laterally spaced apart teeth; cutting blades (32) extending in the plane of rotation of the rotor and/or obliquely relative thereto; and paddles (32) extending generally parallel to the longitudinal axis of rotation.

10. A waste processor (1) as claimed in claim 8 or claim 9 wherein said compaction means comprises one rotor having a plurality of rotor portions (10) disposed in respective ones of said separate passage means (8) and adapted for compaction of respective types of waste material (24), said rotor being driven by a single motor (26).

11. A waste processor (1) as claimed in any one of the preceding claims which includes an internal washing system (44) formed and arranged for washing at least part of said passage means (8) so as to remove periodically, waste material (24) residues, in use of the processor (1) thereby to control build up of such residues.

12. A waste processor (1) as claimed in any one of the preceding claims which includes extractor means (40) formed and arranged to remove air from the processor (1) and any unpleasant odours contained therein, in use of the processor (1).

13. A method of facilitating the recycling of domestic waste material (24) in a domestic environment comprising the steps of:
providing a waste processor (1);
separating the waste material (24) into different categories; and
introducing the different categories of waste (24) into different inlet means (6) of said processor (1), for collection in separate respective collection zones therein,
characterized in that there is provided a domestic waste processor (1) according to claim 1 and in that said method includes the step of:
separately compacting at least one of the separated different categories of waste (24) in transit from said different inlet means (6) to said respective collection zones (4) by said compaction means (10) of said waste processor (1).

14. A method as claimed in claim 13 which includes the step(s) of periodically emptying and/or replacing said containers (4).

## Patentansprüche

1. Hausmüllaufbereitungsanlage für eine Vielzahl von unterschiedlichen Typen von Abfällen, bestehend aus einem Gehäuse (2), das eine Vielzahl von Einlaßmitteln (6) hat, die mit entsprechenden Sammelzonen verbunden sind, welche mit abnehmbaren Containern (4) versehen sind, gekennzeichnet durch getrennte Durchgangsmittel (8) zwischen jedem der Einlaßmittel und den Sammelzonen, wobei jedes dieser Durchgangsmittel mit Verdichtungsmitteln (10) ausgestattet ist, die für die wirksame Verdichtung von wenigstens einem der Vielzahl unterschiedlicher Typen von Müll (24), die durch diese Durchgangsmittel (8) geleitet werden, vorgesehen und angeordnet sind.

2. Hausmüllaufbereitungsanlage (1) nach Anspruch 1, bei der die Aufbereitungsanlage (1) die Form eines Haushaltgerätes hat, das so ausgeführt und angeordnet ist, daß es mit dem Entwurf einer nach dem Baukastensystem aufgebauten Küche vereinbar ist.

3. Hausmüllaufbereitungsanlage (1) nach Anspruch 1 oder Anspruch 2, bei der die Durchgangsmittel (8) in gekrängter Bauweise ausgeführt sind, um den Zugriff des Benutzers zum Verdichtungsmittel (10) durch die Durchgangsmittel (8) einzuschränken.

4. Hausmüllaufbereitungsanlage (1) nach einem der Ansprüche 1 bis 3, bei der die Durchgangsmittel (8) so ausgeführt und angeordnet sind, daß sie von den Einlaßmitteln (6) allgemein nach unten zu den Verdichtungsmitteln (10) für den Betrieb der Aufbereitungsanlage (1) mit Schwerkraftzuführung führen.

5. Hausmüllaufbereitungsanlage (1) nach einem der Ansprüche 1 bis 4, bei der die Einlaßmittel (6) mit einem Deckel (18) versehen sind, der mit einem hygienischen Verschluß ausgeführt und versehen ist, um den Austritt von Gerüchen auf ein Minimum zu verringern.

6. Hausmüllaufbereitungsanlage (1) nach Anspruch 5, bei der die Aufbereitungsanlage mit einem Verfahrenseingriffsmittel versehen ist, um das Verdichtungsmittel zu stoppen, wenn der Deckel (18) während der Aufbereitung geöffnet wird.

7. Hausmüllaufbereitungsanlage (1) nach einem der Ansprüche 1 bis 6, bei der die abnehmbaren Container (4) mit einem hygienischen Verschluß versehen sind, um den Benutzer während der Abnahme der gefüllten Container (4) von der Aufbereitungsanlage (1) zu schützen.

8. Hausmüllaufbereitungsanlage (1) nach einem der Ansprüche 1 bis 7, bei der die Verdichtungsmittel (10) wenigstens einen Rotor aufweisen, der ein Mittel (32) zum Eingreifen in das Abfallmaterial hat, das so ausgeführt und angeordnet ist, daß es den Abfall (24) zerkleinern und verdichten kann.

9. Hausmüllaufbereitungsanlage (1) nach Anspruch 8, bei der das Mittel (32) zum Eingreifen in das Abfallmaterial wenigstens einen von auf dem Umfang angeordneten und/oder seitlich voneinander getrennten Zähnen; Schneidblätter (32), die sich in der Rotationsebene des Rotors und/oder schräg zu dieser befinden; und Schaufeln (32), die allgemein parallel zur Rotationslängsachse verlaufen, einschließt.

10. Hausmüllaufbereitungsanlage (1) nach Anspruch 8 oder Anspruch 9, bei der das Verdichtungsmittel einen Rotor aufweist, der eine Vielzahl von Rotorabschnitten (10) hat, die jeweils in einem der getrennten Durchgangsmittel (8) angeordnet sind und für die Verdichtung der entsprechenden Typen des Abfallmaterials (24) geeignet sind, wobei der Rotor durch einen einzigen Motor (26) angetrieben wird.

11. Hausmüllaufbereitungsanlage (1) nach einem der vorstehenden Ansprüche, die ein internes Waschsystem (44) einschließt, das zum Waschen von wenigstens einem Teil der Durchgangsmittel (8) aufgebaut und angeordnet ist, um bei der Nutzung der Aufbereitungsanlage (1) regelmäßig Rückstände des Abfallmaterials (24) zu entfernen, um so die Ansammlung solcher Rückstände einzudämmen.

12. Hausmüllaufbereitungsanlage (1) nach einem der vorstehenden Ansprüche, die ein Extraktionsmittel (40) einschließt, das so aufgebaut und angeordnet ist, daß es bei der Nutzung der Aufbereitungsanlage (1) Luft und mögliche, in dieser enthaltene unangenehme Gerüche aus der Aufbereitungsanlage (1) entfernt.

13. Verfahren zur Erleichterung der Aufbereitung von Hausmüll (24) in der häuslischen Umgebung, bestehend aus den Schritten:
Bereitstellung einer Müllaufbereitungsanlage (1);
Trennung des Mülls (24) nach unterschiedlichen Kategorien; und
Einführung der unterschiedlichen Kategorien von Müll (24) in verschiedene Einlaßmittel (6) der Aufbereitungsanlage (1) zum Sammeln in entsprechenden getrennten Sammelzonen in dieser Anlage,
dadurch gekennzeichnet, daß eine Hausmüllaufbereitungsanlage (1) nach Anspruch 1 bereitgestellt wird und daß das Verfahren folgende Schritte einschließt:
getrenntes Verdichten von wenigstens einer der getrennten, unterschiedlichen Kategorien von Müll (24) beim Durchgang von den verschiedenen Einlaßmitteln (6) zu den entsprechenden Sammelzonen (4) durch die Verdichtungsmittel (10) der Müllaufbereitungsanlage (1).

14. Verfahren nach Anspruch 13, das den (die) Schritt(e) der regelmäßigen Leerung und/oder des Auswechselns der Container (4) einschließt.

## Revendications

1. Un appareil de traitement de déchets ménagers pour plusieurs types différents de déchets, comprenant un boîtier (2), possédant plusieurs moyens d'entrée (6), connectés à des zones de collecte respectives qui y sont agencées, avec des conteneurs amovibles (4), caractérisé par des moyens de passage séparés (8) entre chacun des dits moyens d'entrée et des dites zones de collecte, chacun des dits moyens de passage possédant un moyen de compactage (10), formé et agencé en vue d'un compactage efficace d'au moins un des plusieurs types différents de déchets (24) traversant un des dits moyens de passage (8).

2. Un appareil de traitement des déchets (1) selon la revendication 1, ledit appareil de traitement (1) ayant la forme d'un appareil ménager, formé et agencé de sorte à être compatible avec un mobilier de cuisine par éléments.

3. Un appareil de traitement des déchets (1) selon les revendications 1 ou 2, dans lequel lesdits moyens de passage (8) ont une configuration coudée, de façon à restreindre l'accès d'un utilisateur au moyen de compactage (10) à travers lesdits moyens de passage (8).

4. Un appareil de traitement des déchets (1) selon l'une quelconque des revendications 1 à 3, dans lequel lesdits moyens de passage (8) sont formés et agencés de sorte à mener en général vers le bas en direction du dit moyen de compactage (10), à partir des moyens d'entrée (6) en vue d'un fonctionnement à chargement par gravité de l'appareil de traitement (1).

5. Un appareil de traitement des déchets (1) selon l'une quelconque des revendications 1 à 4, dans lequel ledit moyen d'entrée (6) comporte un moyen de couverture (18), formé et agencé avec un moyen d'étanchéité hygiénique en vue de réduire au minimum l'échappement d'odeurs.

6. Un appareil de traitement des déchets (1) selon la revendication 5, ledit appareil de traitement comportant un moyen d'intervention de processus pour arrêter ledit moyen de compactage lorsque ledit moyen de couvercle (18) est ouvert au cours du traitement.

7. Un appareil de traitement des déchets (1) selon l'une quelconque des revendications 1 à 6, dans lequel lesdits conteneurs amovibles (4) comportent un moyen de fermeture hygiénique pour protéger un utilisateur au cours de l'enlèvement de conteneurs remplis (4) de l'appareil de traitement (1).

8. Un appareil de traitement des déchets (1) selon l'une quelconque des revendications 1 à 7, dans lequel ledit moyen de compactage (10) comprend au moins un rotor possédant un moyen d'engagement des déchets (32), formé et agencé en vue du broyage et de la compression des déchets (24).

9. Un appareil de traitement des déchets (1) selon la revendication 8, dans lequel ledit moyen d'engagement des déchets (32) englobe au moins une des dents espacées circonférentiellement et/ou latéralement; des lames de coupe (32) s'étendant dans le plan de rotation du rotor et/ou obliques par rapport à celui-ci; et des pales (32) s'étendant en général parallèlement à l'axe de rotation longitudinal.

10. Un appareil de traitement des déchets (1) selon les revendications 8 ou 9, dans lequel ledit moyen de compactage comprend un rotor possédant plusieurs parties de rotor (10) disposées dans lesdits moyens de passage séparés respectifs (8) et servant à compacter les types respectifs de déchets (24), ledit rotor étant entraîné par un seul moteur (26).

11. Un appareil de traitement des déchets (1) selon l'une quelconque des revendications précédentes, englobant un système de lavage interne (44) formé et agencé de sorte à laver au moins une partie des dits moyens de passage (8) pour enlever périodiquement des résidus de déchets (24), lors de l'utilisation de l'appareil de traitement (1), et pour contrôler ainsi l'accumulation de tels résidus.

12. Un appareil de traitement des déchets (1) selon l'une quelconque des revendications précédentes, englobant un moyen d'extraction (40) formé et agencé de sorte à évacuer l'air de l'appareil de traitement (1) ainsi qu'une quelconque odeur désagréable qui y est contenue, lors de l'utilisation de l'appareil de traitement (1).

13. Un procédé pour faciliter le recyclage de déchets ménagers (24) dans un environnement ménager, comprenant les étapes suivantes:
fourniture d'un appareil de traitement des déchets (1);
séparation des déchets (24) en différentes catégories; et
introduction des différentes catégories de déchets (24) dans différents moyens d'entrée (6) du dit appareil de traitement (1), pour les collecter dans des zones de collecte séparées respectives,
caractérisé par un appareil de traitement des déchets ménagers (1) selon la revendication 1, et en ce que le procédé englobe l'étape de:
compactage séparé d'au moins une des différentes catégories séparées de déchets (24) provenant des dits différents moyens d'entrée (6) et se dirigeant vers les zones de collecte respectives (4), par ledit moyen de compactage (10) du dit appareil de traitement des déchets (1).

14. Un procédé selon la revendication 13, englobant l'étape (les étapes) de vidange périodique et/ou de remplacement des dits conteneurs (4).
